Europäisches Patentamt

European Patent Office

Office européen des brevets

(11) Veröffentlichungsnummer: **0 309 743 B1**

# EUROPÄISCHE PATENTSCHRIFT

(45) Veröffentlichungstag der Patentschrift: **03.06.92**

(51) Int. Cl.⁵: **B01D 29/15**, B01D 29/68, B01D 35/16

(21) Anmeldenummer: **88113924.0**

(22) Anmeldetag: **26.08.88**

(54) **Rückspülfilter.**

(30) Priorität: **02.10.87 DE 3733306**

(43) Veröffentlichungstag der Anmeldung:
**05.04.89 Patentblatt 89/14**

(45) Bekanntmachung des Hinweises auf die
Patenterteilung:
**03.06.92 Patentblatt 92/23**

(84) Benannte Vertragsstaaten:
**AT CH DE FR GB IT LI**

(56) Entgegenhaltungen:
**EP-A- 0 154 726**
**DE-A- 2 725 330**
**DE-U- 1 963 574**
**FR-A- 1 427 804**
**US-A- 2 634 862**

(73) Patentinhaber: **Judo Wasseraufbereitung
GmbH
Hohreuschstrasse 39-41
W-7057 Winnenden(DE)**

(72) Erfinder: **Schuler, Hansjörg
Reisbachstrasse 3
W-7150 Backnang(DE)**

(74) Vertreter: **KOHLER SCHMID + PARTNER Patentanwälte
Ruppmannstrasse 27
W-7000 Stuttgart 80(DE)**

## Beschreibung

Die Erfindung betrifft ein Rückspülfilter mit einem Gehäuse, das ein zylindrisches Schauglas aufweist, mit einem im Gehäuse konzentrisch zum Schauglas drehbar gelagerten Filtereinsatz, der das Gehäuse in zwei Kammern unterteilt, von denen die äußere mit einem Einlaß und die innere mit einem Auslaß verbunden ist, und mit einer an die Außenseite des Filtereinsatzes angrenzenden, sich parallel zu dessen Achse erstreckenden Rückspülrinne, die an einem Ende mit einem durch ein Ventil absperrbaren Rückspülkanal verbunden ist.

Ein solches Rückspülfilter ist aus der DE-OS 27 25 330 bekannt. Es hat einen sehr einfachen Aufbau und ist daher auch für kleine Anlagen geeignet, beispielsweise für Anlagen zur Haushalts-Wasserversorgung. Das Reinigen des Filters erfolgt bei Bedarf durch einfaches Drehen des Filtereinsatzes mittels des außerhalb des Gehäuses angeordneten Handrades. Diese Reinigung kann ohne weiteres häufig im Vorbeigehen vorgenommen werden. Andererseits ist es gerade für ein derart einfach ausgebildetes Rückspülfilter, bei der eine Rückspülung nicht automatisch vorgenommen und überwacht wird, von besonderer Bedeutung, daß sich der Benutzer von der Notwendigkeit und/oder von dem Erfolg eines Rückspülvorganges überzeugen kann. Diesem Zweck dient das zylindrische Schauglas, das eine Betrachtung des dazu konzentrischen Filtereinsatzes ermöglicht. Je nach Qualität des Wassers wird jedoch das Schauglas häufig schon nach relativ kurzer Zeit undurchsichtig und läßt dann eine Beobachtung des Filtersiebes nicht mehr zu. Schuld daran ist ein Bewuchs durch Algen sowie die Bildung eines Eisen- und/oder Manganbelages. Algen sowie Eisen und Mangan finden sich in allen üblichen Trink-und Brauchwässern, so daß ein Beschlagen oder Bewachsen des Schauglases nicht vermeidbar ist.

Aus der DE-PS 34 09 473 ist es bekannt, zur Reinigung eines zylindrischen Schauglases, daß zum Filtereinsatz konzentrisch angeordnet ist, einen Scheibenwischer vorzusehen, der sich an der Außenseite einer zwischen Filtereinsatz und Schauglas angeordneten Absaugdüse befindet, die am Ende eines Schwenkarmes befestigt ist, so daß sie über die Oberfläche des Filtersiebes hinwegführbar ist. Die Anbringung eines entsprechenden Scheibenwischers in dem Raum zwischen Filtersieb und Schauglas unter Verwendung eines den Scheibenwischer tragenden radialen Armes würde jedoch bei einem Rückspülfilter des eingangs genannten Art einen erheblichen zusätzlichen Aufwand erfordern der die Anwendung eines solchen Scheibenwischers bei einem Rückspülfilter mit dem genannten einfachen Aufbau ausschließt.

Demgemäß liegt der Erfindung die Aufgabe zugrunde, ein Rückspülfilter mit der eingangs beschriebenen Ausbildung derart zu verbessern, daß die Durchsichtigkeit des Schauglases zuverlässig erhalten bleibt, ohne daß der Aufbau des Rückspülfilters nennenswert kompliziert wird.

Diese Aufgabe wird nach der Erfindung dadurch gelöst, daß an der Außenseite des Filtereinsatzes ein an dem Schauglas anliegender Scheibenwischer angebracht ist.

Demnach findet auch bei dem erfindungsgemäßen Rückspülfilter ein Scheibenwischer Verwendung, der an dem Schauglas anliegt und über das Schauglas hinwegführbar ist, um dadurch eine Reinigung des Schauglases zu bewirken, jedoch handelt es sich hier nicht um ein selbständiges Bauteil, das in bekannter Weise zwischen Filtereinsatz und Schauglas angeordnet und an einem besonderen, schwenkbaren Arm befestigt ist, sondern es ist der Scheibenwischer unmittelbar an der Außenseite des Filtereinsatzes befestigt. Daher werden keine zusätzlichen Bauteile zum Anbringen und Bewegen des Scheibenwischers benötigt. Vielmehr wird der drehbare Filtereinsatz unmittelbar selbst als Träger für den Scheibenwischer und zugleich zum Bewegen des Scheibenwischers benutzt. Dadurch wird der Vorteil des sehr einfachen Aufbaus des Rückspülfilters erhalten und durch die bei jedem Rückspülvorgang automatisch bewirkte Reinigung des Schauglases dessen Gebrauchswert bedeutend erhöht. Dabei wird die Tatsache ausgenutzt, daß das Filtersieb zwar ein sehr empfindliches Organ darstellt, das keinerlei tragende Funktionen übernehmen kann, daß jedoch das Filtersieb selbst an einem Träger befestigt ist, der bei entsprechender Ausbildung auch zur Befestigung eines Scheibenwischers geeignet ist.

Ein gewisses Problem stellen die Stoffe dar, die mit Hilfe des Scheibenwischers von dem Schauglas entfernt werden und sich dann in der Einlaßkammer des Rückspülfilters befinden. Diese Verunreinigungen werden auch gewöhnlich nicht mit dem zulaufenden Wasser der Oberfläche des Filtereinsatzes zugeführt und dann beim nächsten Rückspülvorgang entfernt, sondern setzen sich am Boden des Rückspülfilters ab, wo sich dann im Laufe der Zeit eine Schlammschicht bilden kann. Das Entstehen einer solchen Schlammschicht ist selbstverständlich in einem Rückspülfilter, das in Anlagen zur Trinkwasserversorgung Anwendung finden soll, höchst unerwünscht. Das erfindungsgemäße Rückspülfilter bietet jedoch die Möglichkeit, das Ansammeln der von dem Schauglas entfernten Substanzen in der Einlaßkammer des Rückspülfilters zu vermeiden, indem in weiterer Ausgestaltung der Erfindung der Filtereinsatz an seinem dem Rückspülkanal benachbarten Ende einen die äußere Kammer abschließenden Flansch aufweist, der neben dem Scheibenwischer eine Aussparung aufweist, die eine Verbindung zu dem Rückspülkanal herstellt, wenn sich der Scheibenwischer unmittelbar neben der Rückspülrinne befindet.

Durch diese sehr einfache Maßnahme wird der von dem Flansch gebildete Boden der äußeren Einlaßkammer des Filters in bestimmten Stellungen mit der Rückspülrinne verbunden, so daß die sich am Boden des Flansches insbesondere neben dem Scheibenwischer ansammelnden Fremdkörper durch den Rückspülkanal abgeführt werden, wenn die Aussparung im Flansch die Verbindung zum Rückspülkanal herstellt. Dabei ist es besonders vorteilhaft, wenn die Aussparung zu beiden Seiten des Scheibenwischer angeordnet ist, also unabhängig von der Bewegungsrichtung des Scheibenwischers wirksam wird, wenn der Scheibenwischer eine beliebige der beiden dem Rückspülrinne benachbarten Endstellungen erreicht hat.

Wie bereits eingangs erwähnt, soll es sich bei dem erfindungsgemäßen Rückspülfilter um ein Gerät mit sehr einfachem Aufbau und trotzdem hoher Betriebssicherheit handeln, das auch bei unsachgemäßer Behandlung keinen Schaden erleidet. Dabei ist es besonders wichtig, daß der drehbare Filtereinsatz mit dem Scheibenwischer auch einer relativ groben Behandlung standhält. Eine bevorzugte Ausführungsform der Erfindung genügt diesen Ansprüchen und ist dadurch gekennzeichnet, daß das Gehäuse ein Anschlußstück und einen am Anschlußstück befestigten Filtertopf aufweist und der Filtereinsatz mit einem Ende in einer zylindrischen Aussparung des Anschlußstückes und am anderen Ende mit einem Zapfen im Boden des Filtertopfes drehbar gelagert ist. Dabei liegt einerseits der die äußere Kammer abschließende Flansch an einer Stirnfläche des Anschlußstückes an, während andererseits der Zapfen den Boden des Filtertopfes durchdringt und an seinem sich außerhalb des Filtertopfes befindenden Ende mit dem Handrad versehen ist. Auf diese Weise wird eine sehr großflächige und robuste Lagerung des drehbaren Filtereinsatzes erzielt, der unmittelbar mit dem Flansch versehen ist, der zusammen mit der Stirnfläche des Anschlußstückes eine Art Drehschieber bildet, der die Kammer des Filters nur dann mit dem Rückspülkanal in Verbindung bringt, wenn eine Aussparung im Flansch mit einer entsprechenden Aussparung in der Stirnfläche des Anschlußstückes zur Deckung gebracht wird.

Weiterhin ist es von Vorteil, wenn der Filtereinsatz einen rohrförmigen Tragkörper aufweist, der mit Abstand von einem am Tragkörper abgestützten Siebzylinder umgeben ist, so daß zwischen dem Tragkörper und dem Siebzylinder ein Ringraum entsteht, der an einem Ende des Tragkörpers durch eine am Tragkörper angebrachte ringförmige Endwand verschlossen sein kann, wogegen der Innenraum des Tragkörpers über einen zwischen Gehäuse und Endwand belassenen Zwischenraum mit der äußeren Kammer in Verbindung steht. Dabei dann die Anordnung so getroffen sein, daß am anderen Ende der Tragkörper in eine zylindrische Bohrung des Anschlußstückes eingreift, die mit dem Einlaß des Rückspülfilters in Verbindung steht, und der die äußere Kammer abschließende Flansch an einem in Verlängerung des Siebzylinders angeordneten Ring angebracht ist, der in eine die Bohrung des Anschlußstückes konzentrisch umgebende Aussparung eingreift, die mit dem Auslaß des Anschlußstückes in Verbindung steht.

Weitere vorteilhafte Ausgestaltungen der Erfindung können darin bestehen, daß der Filtertopf aus einem durchsichtigen Werkstoff einteilig hergestellt ist und an seiner Innenseite die Rückspülrinne bildende Rippen angeformt sind. Weiterhin kann der im Anschlußstück angeordnete Rückspülkanal neben dem Flansch des Filtereinsatzes in der Stirnfläche des Anschlußstückes münden. Dabei ist es vorteilhaft, wenn der Filtertopf im Bereich seiner am Filtereinsatz anliegenden Fläche eine die Mündung des Rückspülkanales mit der Rückspülrinne verbindende Aussparung aufweist.

Weitere Einzelheiten und Ausgestaltungen der Erfindung ergeben sich aus der folgenden Beschreibung des in der Zeichnung dargestellten Ausführungsbeispieles. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

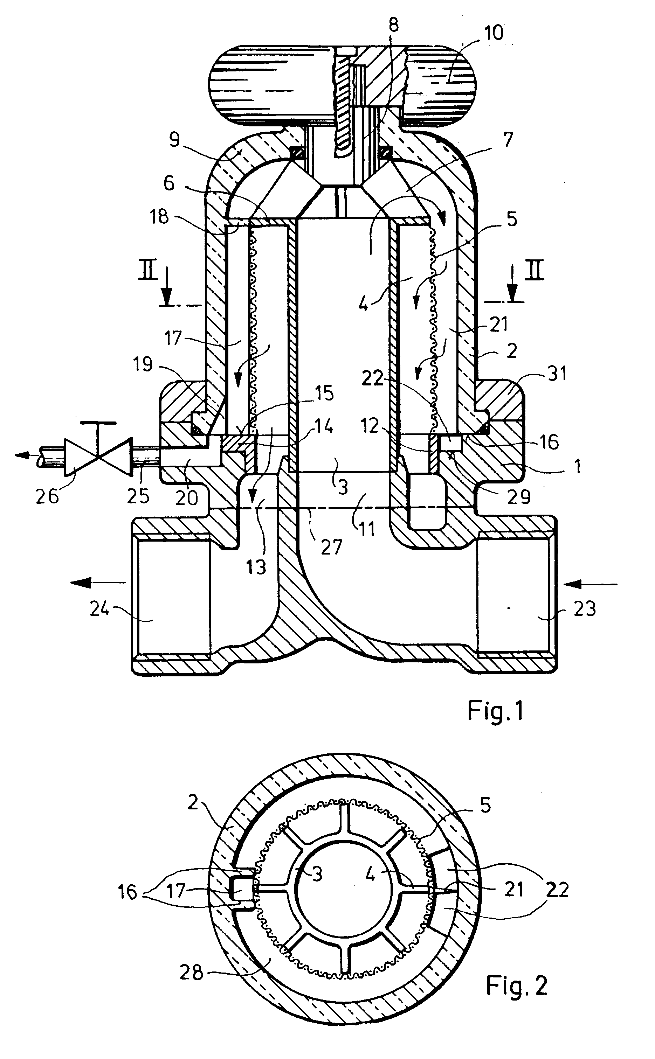

Fig. 1    einen Längsschnitt durch einen Rückspülfilter nach der Erfindung,

Fig. 2    einen Schnitt längs der Linie II-II durch den Rückspülfilter nach Fig. 1,

Fig. 3    einen weiteren Längsschnitt durch den in Fig. 1 dargestellten Rückspülfilter jedoch mit veränderter Stellung des drehbaren Filtereinsatzes und

Fig. 4    einen Schnitt längs der Linie IV-IV durch den Rückspülfilter nach Fig. 3.

Der in der Zeichnung dargestellte Rückspülfilter weist ein Gehäuse auf, das aus einem Anschlußstück 1 und einem Filtertopf 2 besteht, der an dem Anschlußstück 1 mittels eines Flansches 31 befestigt ist. Innerhalb dieses Gehäuses befindet sich ein zum Filtertopf 2 konzentrischer Filtereinsatz, der einen rohrförmigen Tragkörper 3 mit radial nach außen abstehenden, sich parallel zur Achse des Tragkörpers 3 erstreckenden Rippen 4 aufweist. An den Enden der Rippen 4 stützt sich ein Siebzylinder 5 ab, so daß zwischen dem Tragkörper 3 und dem Siebzylinder 5 ein durch die Rippen 4 unterteilter Ringraum entsteht. Dieser Ringraum ist an einem Ende des Tragkörpers 3 durch eine am Tragkörper angebrachte Endwand 6 verschlossen. An dieser Endwand 6 ist mittels Streben 7 ein Zapfen 8 befestigt, der den Boden 9 des Filtertopfes 2 durchdringt und an seinem sich außerhalb des Filtertopfes 2 befindenden Ende mit einem Handrad 10 versehen ist. Der auf diese Weise mittels des Zapfens im Boden 9 des Filtertopfes 2 drehbar gelagerte Filtereinsatz ist an seinem anderen Ende in einer zentralen, zylindrischen Bohrung 11 des Anschlußstückes 1 gelagert, in die der Filtereinsatz mit dem Ende seines zentralen Tragkörpers 3 unmittelbar eingreift. Außerdem weist der Filtereinsatz ein seinem der Endwand 6 entgegengesetzten Ende einen in Verlängerung des Siebzylinders 5 angeordneten Ring 12 auf, der in eine die zentrale Bohrung 11 des Anschlußstückes 1 konzentrisch umgebende Aussparung 13 eingreift. Der Ring 12 ist an seinem dem Siebzylinder 5 benachbarten Ende mit einem nach außen ragenden Flansch 14 Versehen, dessen dem Siebzylinder 5 zugewandte Fläche 15 sich in der gleichen Ebene befindet wie die Anschlagfläche 16 des Anschlußstückes 1, auf dem das Ende des Filtertopfes 2 aufsitzt. Weiterhin befinden sich an der Innenseite des Filtertopfes 2 zwei zur Achse des Filtertopfes parallele Rippen 16, die bis zum Umfang des Siebzylinders 5 reichen und eine Rückspülrinne 17 begrenzen, die an ihrem vom Anschlußstück 1 entfernten Ende durch eine Querwand 18 abgeschlossen ist und an ihrem dem Anschlußstück 1 benachbarten Ende über eine in der Wandung des Filtertopfes 2 angebrachte Aussparung 19 mit einem im Anschlußstück 1 angeordneten Rückspülkanal 20 verbunden ist.

An der Außenseite des Filtereinsatzes befindet sich ein elastischer Steg 21, der in Verlängerung einer der Rippen 4 angebracht ist und bis zur Innenseite des Filtertopfes 2 reicht. Dieser elastische Steg 21 bildet einen Scheibenwischer für das Schauglas, das von dem aus einem durchsichtigen Material bestehenden Filtertopf 2 gebildet wird. Symmetrisch zu dem Scheibenwischer 21 befindet sich in dem am Anschlußstück 1 anliegenden Flansch 14 eine Aussparung 22.

Wie aus der Zeichnung ersichtlich, gehen in dem Anschlußstück 1 des dargestellten Rückspülfilters die zentrale Bohrung 11 und die die zentrale Bohrung ringförmig umgebende Aussparung 13 in zwei koaxial zueinander angeordnete, entgegengesetzt gerichtete Anschlußstutzen 23, 24 über, von denen der mit der zentralen Bohrung 11 in Verbindung stehende Rohrstutzen 23 den Zulauf und der mit der ringförmigen Aussparung 13 in Verbindung stehende Anschlußstutzen 24 den Ablauf des Rückspülfilters bildet. Weiterhin schließt sich an den Rückspülkanal 20 im Anschlußstück 1 eine nur schematisch dargestellte Rohrleitung 25 mit einem Absperrventil 26 an. Dabei kann das Anschlußstück 1 in einer zur Achse der Bohrung 11 und der dazu konzentrischen Aussparung 13 senkrechten Ebene 27 geteilt sein, die durch eine strichpunktierte Linie angedeutet ist, so daß die Möglichkeit besteht, die in der Ebene 27 getrennten beiden Teile des Anschlußstückes 1 gegeneinander zu verdrehen und dadurch die Ausrichtung des Rückspülkanales 20 gegenüber der Ausrichtung der Rohrstutzen 23, 24 zu verändern.

Beim normalen Betrieb läuft das zu filtrierende Wasser über den Anschlußstutzen 23 und die zentrale Bohrung 11 in das Filter ein, gelangt durch den rohrförmigen Tragkörper 3 zu dem dem Anschlußstück 1 entgegengesetzten Ende des Filtertopfes, wo es zwischen die den Zapfen 8 haltenden Streben 7 an der Endwand 6 des Filtereinsatzes vorbei in den Ringraum 28 zwischen den Filtertopf 2 und den Siebzylinder 5 gelangt. Nach Durchströmen des Siebzylinders 5 gelangt das dann gefilterte Wasser in den Ringraum zwischen Siebzylinder 5 und Tragkörper 3 und strömt dann über die ringförmige Aussparung 13 zum Anschlußstutzen 24 ab.

Zum Rückspülen wird, vorzugsweise bei gesperrter Abschlußleitung, das Ventil 26 geöffnet, das sich in der an den Rückspülkanal 20 anschließenden Leitung 25 befindet. Es kann dann das in dem Ringraum zwischen Tragkörper 3 und Siebzylinder 5 befindliche Wasser im Bereich der von den Rippen 16 begrenzten Rückspülrinne 17 in der zur normalen Strömungsrichtung umgekehrten Richtung, nämlich von innen nach außen, durch den Siebzylinder hindurchtreten und über den Rückspülkanal 20 abfließen. Dabei wird der jeweils sich im Bereich der Rückspülrinne 17 befindende Abschnitt des Siebzylinder 5 gereinigt und es kann durch Drehen des Siebzylinders 5 mittels des Handrades 10 die gesamte Oberfläche des Siebzylinders 5 an der Rückspülrinne 17 vorbeigeführt und damit durch Rückspülen gereinigt werden.

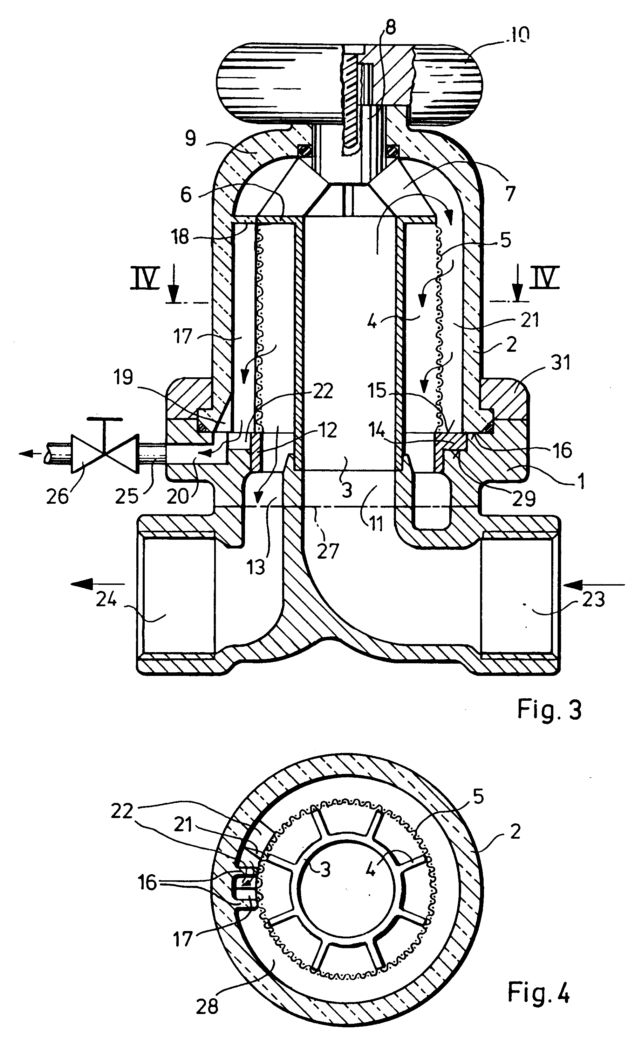

Beim Drehen des Siebzylinders 5 wird der von der elastischen Leiste 21 gebildete Scheibenwischer über die Innenseite des als Schauglas ausgebildeten Filtertopfes 2 hinweggeführt. Demgemäß hat jedes Drehen des Filtereinsatzes beim Rückspülen zugleich ein Reinigen des vom Filtertopf gebildeten Schauglases zur Folge, so daß stets eine einwandfreie Sicht in das Innere des Rückspülfilters und damit auf das Filtersieb gewährleistet ist. Die von dem Scheibenwischer 21 von der Innenseite des Filtertopfes 2 abgestreiften Feststoffe haben die Tendenz, zu sinken und sich daher am Boden des den Siebzylinder 5 umgebenden Raumes abzusetzen. Dieser Boden wird von dem Flansch 14 und im Bereich der zum Scheibenwischer 21 symmetrischen Aussparung 22 von der am Anschlußstück 1 vorhandenen Anlagefläche 29 für diesen Flansch gebildet. Beim Drehen des Filtereinsatzes wird der Flansch 14 mit den sich darauf angesammelten Ablagerungen an einer der die Rückspülrinne 17 begrenzenden Rippen 16 vorbeigeführt, welche diese Ablagerungen von dem Flansch 14 abstreift, so daß sie sich zunächst neben der jeweiligen Rippe ansammeln, bis der Scheibenwischer 21 diese Rippe 16 erreicht und damit die zum Scheibenwischer symmetrische Aussparung 22 an der Rippe vorbei in den Bereich des Rückspülkanals 20 gelangt. Bei senkrechter Anordnung des Filtertopfes können die abgestreiften Feststoffteilchen in die Aussparung 22 hineinfallen und von dort aus in den Rückspülkanal 20 gelangen, wie es die Fig. 3 und 4 deutlich zeigen, so daß dann die Rückstände über den Rückspülkanal 20 in der gleichen Weise abgeführt werden können wie die beim Rückspülen aus dem Siebzylinder gelösten Teilchen. Wird dagegen das Rückspülfilter mit waagerecht angeordnetem Filterkopf 2 montiert, ergeben sich ähnlich vorteilhafte Bedingungen, wenn sich die Rückspülrinne 17 an der tiefsten Stelle des Filterkopfes befindet. Die von dem Scheibenwischer 21 abgestreiften Feststoffteilchen sammeln sich dann neben der Rückspülrinne 17 an der Wandung des Filtertopfes in einer Art Nebenrinne, die von dem Scheibenwischer 21 und der benachbarten Rippe 16 der Rückspülrinne begrenzt wird und aus der die abgestreiften Feststoffteilchen einwandfrei ausgespült werden.

Das dargestellte Rückspülfilter zeichnet sich durch einen äußerst einfachen Aufbau, eine hohe Stabilität und Zuverlässigkeit und auch durch seine Bedingungsfreundlichkeit aus. Es ist zu beachten, daß es im wesentlichen aus nur drei Teilen besteht, nämlich dem Anschlußstück 1, dem Filtertopf 2 und dem Filtereinsatz. Diese Teile sind einfach ineinandergesteckt und mittels eines Flansches miteinander verbunden. Die Teile sind unempfindlich und halten auch einer groben Behandlung stand. Trotzdem erlaubt das Filter nicht nur ein einwandfreies Rückspülen, sondern auch ein gleichzeitiges Reinigen des Schauglases und hat dabei den besonderen Vorteil, daß es nicht nur die Abfuhr der beim Rückspülen gelösten, sondern auch der vom Sichtfenster entfernten Verunreinigungen gewährleistet.

**Patentansprüche**

1. Rückspülfilter mit einem Gehäuse, das ein zylindrisches Schauglas (2) aufweist, mit einem im Gehäuse konzentrisch zum Schauglas drehbar gelagerten, mit einem außerhalb des Gehäuses angeordneten Handrad (10) verbundenen Filtereinsatz, der das Gehäuse in zwei Kammern unterteilt, von denen die äußere mit einem Einlaß und die innere mit einem Auslaß verbunden ist, und mit einer an die Außenseite des Filtereinsatzes angrenzenden, sich parallel zu dessen Achse erstreckenden Rückspülrinne (17), die an einem Ende mit einem durch ein Ventil absperrbaren Rückspülkanal (20) verbunden ist,
dadurch gekennzeichnet, daß
an der Außenseite des Filtereinsatzes ein an dem Schauglas (2) anliegender Scheibenwischer (21) angebracht ist.

2. Rückspülfilter nach Anspruch 1, dadurch gekennzeichnet, daß der Filtereinsatz an seinem dem Rückspülkanal (20) benachbarten Ende einen die äußere Kammer (28) abschließenden Flansch (14) aufweist, der neben dem Scheibenwischer (21) eine Aussparung (22) aufweist, die eine Verbindung zu dem Rückspülkanal (20) herstellt, wenn sich der Scheibenwischer (21) unmittelbar neben der Rückspülrinne (17) befindet.

3. Rückspülrinne nach Anspruch 2, dadurch gekennzeichnet, daß die Aussparung (22) zu beiden Seiten des Scheibenwischers (21) angeordnet ist.

4. Rückspülfilter nach Anspruch 2 oder 3, dadurch gekennzeichnet, daß das Gehäuse ein Anschlußstück (1) und einen am Anschlußstück (1) befestigten Filtertopf (2) aufweist und der Filtereinsatz mit einem Ende in einer zylindrischen Aussparung (13) des Anschlußstückes (1) und am anderen Ende mit einem Zapfen (8) im Boden (9) des Filtertopfes (2) drehbar gelagert ist und einerseits der die äußere Kammer (28) abschließende Flansch (14) an einer Stirnfläche (29) des Anschlußstückes (1) anliegt und andererseits des Zapfen (8) den Boden (9) des Filtertopfes (2) durchdringt und an seinem sich außerhalb des Filtertopfes (2) befindenden Ende mit dem Handrad versehen ist.

5. Rückspülfilter nach einem der Ansprüche 2 bis 4, dadurch gekennzeichnet, daß der Filtereinsatz einen rohrförmigen Tragkörper (3) aufweist, der mit Abstand von einem am Tragkörper (3) abgestützten Siebzylinder (5) umgeben ist, so daß zwischen dem Tragkörper (3) und dem Siebzylinder (5) ein Ringraum entsteht, daß ein einem Ende des Tragkörpers (3) der Ringraum durch eine am Tragkörper (3) angebrachte ringförmige Endwand (6) verschlossen ist, wogegen der Innenraum des Tragkörpers (3) über einen zwischen Gehäuse (2) und Endwand (6) belassenen Zwischenraum mit der äußeren Kammer (28) in Verbindung steht, daß am anderen Ende der Tragköprer (3) in eine zylindrische Bohrung (11) des Anschlußstückes (1) eingreift, die mit dem Einlaß (23) des Rückspülfilters in Verbindung steht, und daß der die äußere Kammer (28) abschließende Flansch (14) an einem in Verlängerung des Siebzylinders (5) angeordneten Ring (12) angebracht ist, der in eine die Bohrung (11) des Anschlußstückes (1) konzentrisch umgebende Aussparung (13) eingreift, die mit dem Auslaß (24) des Anschlußstückes (1) in Verbindung steht.

6. Rückspülfilter nach Anspruch 4 oder 5, dadurch gekennzeichnet, daß der Filtertopf (2) aus einem durchsichtigen Werkstoff einteilig hergestellt ist, und an seine Innenseite die Rückspülrinne (17) bildende Rippen (16) abgeformt sind.

7. Rückspülfilter nach einem der Ansprüche 4 bis 6, dadurch gekennzeichnet, daß der im Anschlußstück (1) angeordnete Rückspülkanal (20) neben dem Flansch (14) des Filtereinsatzes in der Stirnfläche (16) des Anschlußstückes (1) mündet.

8. Rückspülfilter nach Anspruch 7, dadurch gekennzeichnet, daß der Filtertopf (2) im Bereich seiner am Anschlußstück (1) anliegenden Fläche eine den Rückspülkanal (20) mit der Rückspülrinne (17) verbindende Aussparung (19) aufweist.

## Claims

1. Backwash filter with a casing, which has a cylindrical inspection glass (2), with a filter element mounted in rotary manner in the casing concentrically to the inspection glass and connected to a handwheel (10) positioned outside the casing and which subdivides the latter into two chambers, whereof the outer chamber is connected to an inlet and the inner chamber to an outlet, and with a backwash channel (17) adjacent to the outside of the filter element and extending parallel to its axis and which is connected at one end to a backwash conduit (20) which can be shut off by a valve, characterized in that a windscreen wiper (21) engaging on the inspection glass (2) is fitted to the outside of the filter element.

2. Backwash filter according to claim 1, characterized in that the end of the filter element adjacent to the backwash conduit (20) has a flange (14) terminating the outer chamber (28) and which alongside the windscreen wiper (21) has a recess (22), which forms a connection to the backwash conduit (20) when the windscreen wiper (21) is positioned directly alongside the backwash channel (17).

3. Backwash filter according to claim 2, characterized in that the recess (22) is located on either side of the windscreen wiper (21).

4. Backwash filter according to claims 2 or 3, characterized in that the casing has a connecting piece (1) and a filter pot (2) feed to the connecting piece (1) and one and of the filter element is mounted in rotary manner on a cylindrical recess (13) of the connecting piece (1) and the other end with a pin (8) is mounted in rotary manner in the bottom (9) of the filter pot (2) and on the one hand the flange (14) terminating the outer chamber (28) engages on an end face (29) of the connecting piece (1) and on the other hand the pin (8) passes through the bottom (9) of the filter pot (2) and is provided at its end located outside the filter pot (2) with the handwheel.

5. Backwash filter according to one of the claims 2 to 4, characterized in that the filter element has a tubular support body (3), which is surrounded in spaced manner by a screen cylinder (5) supported on the support body (3), so that an annular space is formed between the support body (3) and the screen cylinder (5), that at one end of the support body (3) the annular space is closed by an annular end wall (6) fitted to the support body (3), whereas the interior of the support body (3) is connected by means of a gap left between the casing (2) and the end wall (6) to the outer chamber (28), that at the other end the support body (3) engages a cylindrical bore (11) of the connecting piece (1), which is connected to the inlet (23) of the backwash filter that the flange (14) terminating the outer chamber (28) is fitted to a ring (12) arranged in the extension of the screen cylinder (5) and which engages in a recess (13) surrounding in concentric manner the bore (11) of the connecting piece (1) and which is connected to the outlet (24) of the connecting piece (1).

6. Backwash filter according to claims 4 or 5, characterized in that the filter pot (2) is made in one piece from a transparent material that ribs (16) forming the backwash channel (17) are formed on its inside.

7. Backwash filter according to one of the claims 4 to 6, characterized in that the backwash conduit (20) issues beside the flange (14) of the filter element in the end face (16) of the connecting piece (1).

8. Backwash filter according to claim 7, characterized in that in the vicinity of its surface engaging on the connecting piece (1), the filter pot (2) has a recess (19) connecting the backwash conduit (20) to the backwash channel (17).

**Revendications**

1. Filtre à lavage à contre-courant comprenant un corps qui présente un verre-regard (2) cylindrique, un insert filtrant qui est supporté de façon à pouvoir tourner dans le corps de manière concentrique au verre-regard et est relié à une roue à main (10) agencée à l'extérieur du corps et qui subdivise le corps en deux compartiments dont l'extérieur est en communication avec une entrée et l'intérieur avec une sortie, et une rigole de lavage à contre-courant (17) qui est adjacente au côté extérieur de l'insert filtrant, s'étend parallèlement à l'axe de ce dernier et est en communication, à une extrémité, avec un canal de lavage à contre-courant (20) obturable par une vanne, caractérisé en ce qu'un essuie-glace (21) en appui sur le verre-regard (2) est agencé sur le côté extérieur de l'insert filtrant.

2. Filtre à lavage à contre-courant suivant la revendication 1, caractérisé en ce que l'insert filtrant présente, à son extrémité voisine du canal de lavage à contre-courant (20), une bride (14) qui obture le compartiment extérieur (28) et qui présente, à côté du lave-glace (21), un évidement (22) qui réalise une communication vers le canal de lavage à contre-courant (20) lorsque le lavage-glace (21) se trouve directement à côté de la rigole de lavage à contre-courant (17).

3. Filtre à lavage à contre-courant suivant la revendication 2, caractérisé en ce que l'évidement (22) est agencé de part et d'autre du lave-glace (21).

4. Filtre à lavage à contre-courant suivant l'une des revendications 2 et 3, caractérisé en ce que le corps présente une pièce de raccordement (1) et une cuve (2) fixée sur la pièce de raccordement (1) et en ce que l'insert filtrant est supporté de manière à pouvoir tourner, à une extrémité, dans un évidement cylindrique (13) de la pièce de raccordement (1) et, à l'autre extrémité, par un tourillon (8) dans le fond (9) de la cuve (2) et en ce que, d'une part, la bride (14) obturant le compartiment extérieur (28) est en appui sur une face frontale (29) de la pièce de raccordement (1) et, d'autre part, le tourillon (8) passe à travers le fond (9) de la cuve (2) et est pourvu de la roue à main à son extrémité qui se trouve à l'extérieur de la cuve (2).

5. Filtre à lavage à contre-courant suivant l'une des revendications 2 à 4, caractérisé en ce que l'insert filtrant présente un corps de support (3) tubulaire qui est entouré à une certaine distance par un cylindre de filtrage (5) supporté sur le corps de support (3) de façon qu'il se forme entre le corps de support (3) et le cylindre de filtrage (5) un espace annulaire, en ce que, a une extrémité du corps de support (3), l'espace annulaire est fermé par une paroi d'extrémité (6) annulaire agencée sur le corps de support (3), tandis que l'espace intérieur du corps de support (3) est, par l'intermédiaire d'un espace intermédiaire, laissé entre le corps (2) et la paroi d'extrémité (6), en communication avec le compartiment extérieur (28), en ce que, à l'autre extrémité, le corps de support (3) pénètre dans un alésage cylindrique (11) de la pièce de raccordement (1) qui est en communication avec l'entrée (23) du filtre à lavage à contre-courant, et en ce que la bride (14) qui obture le compartiment extérieur (28) est agencée sur un anneau (12) qui est disposé dans le prolongement du cylindre de filtrage (5) et qui pénètre dans un évidement (13) qui entoure de manière concentrique l'alésage (11) de la pièce de raccordement (1) et qui est en communication avec la sortie (24) de la pièce de raccordement (1).

6. Filtre à lavage à contre-courant suivant l'une des revendications 4 et 5, caractérisé en ce que la cuve (2) est fabriquée d'une pièce en un matériau transparent et en ce que des nervures (16) formant la rigole de lavage à contre-courant (17) sont façonnées sur son côté interne.

7. Filtre à lavage à contre-courant suivant l'une des revendications 4 à 6, caractérisé en ce que le canal de lavage à contre-courant (20) disposé dans la pièce de raccordement (1) débouche, à côté de la bride (14) de l'insert filtrant, dans la surface frontale (16) de la pièce de raccordement (1).

8. Filtre à lavage à contre-courant suivant la revendication 7, caractérisé en ce que la cuve (2) présente, dans la zone de sa surface adjacente à la pièce de raccordement (1), un évidement (19) qui relie le canal de lavage à contre-courant (20) à la rigole de lavage à contre-courant (17).

Fig.1

Fig.2

Fig. 3

Fig. 4